# EUROPEAN PATENT SPECIFICATION

(11) **EP 0 650 761 B1**
(45) Date of publication and mention of the grant of the patent: **13.01.1999**
(21) Application number: 94203133.7
(22) Date of filing: 27.10.1994
(51) Int. Cl.: B01J 31/28, C08G 67/02

(54) **Catalyst composition and process for the preparation of polymers**
Katalysatorzusammensetzung und Verfahren zur Herstellung von Polymeren
Composition de catalyseur et procédé pour la préparation de polymères

(30) Priority: 28.10.1993 EP 93203031
(43) Date of publication of application: 03.05.1995
(73) Proprietor: SHELL INTERNATIONALE RESEARCH MAATSCHAPPIJ B.V., 2596 HR Den Haag (NL)
(72) Inventor: Bradford, Arleen Marie, NL-1031 CM Amsterdam (NL); Buys, Andre, NL-1031 CM Amsterdam (NL)

(56) References cited:
- EP-A- 0 229 408
- EP-A- 0 239 145
- EP-A- 0 272 728
- EP-A- 0 390 237
- EP-A- 0 443 687

## Description

The invention relates to a catalyst composition and a process for the preparation of copolymers of carbon monoxide with one or more compounds comprising an ethylenically unsaturated bond.

From numerous patent applications it is known that linear copolymers of carbon monoxide and one or more ethylenically unsaturated compounds, in which copolymers the units originating from carbon monoxide alternate or substantially alternate with the units originating from the ethylenically unsaturated compound(s), may be prepared by reacting the monomers under polymerization conditions with a catalyst system which comprises a Group VIII metal and an anion. Under the polymerization conditions concerned the anion is non- or weakly coordinating with the Group VIII metal.

The preparation of these copolymers may be carried out in the liquid phase, i.e. such that the continuous phase is formed by a liquid diluent, usually a non-polymerizable liquid in which the catalyst dissolves, but in which the formed copolymers are substantially insoluble. The recovery and purification of the product normally requires a filtration or centrifugation step. Moreover, a distillation step is usually required in order to recover pure diluent.

The preparation of the copolymers may also proceed in the gas phase, whereby the continuous phase is formed by gaseous carbon monoxide and possibly one or more of the other monomers, if they are present in the gas phase under the prevailing polymerization conditions. The gas phase preparation of the copolymers is considered advantageous, because it allows a more simple product recovery than the liquid phase process. The - at technical scale costly - separation and purification steps inherent in the liquid phase process can be omitted, thus improving the economy of the process.

Considerable efforts have been made to increase the activity of the catalyst system, some improvement resulting e.g. by changing the reaction conditions or by modifying the components participating in the catalyst. According to EP-A-239145 the catalytic activity is enhanced by incorporating an oxidant, viz. a quinone, in the catalyst system. The preferred amount is indicated as from 1-10000 and in particular from 10-5000 mol per gram atom of palladium. In practice - according to the examples - the process is carried out in the liquid phase, whereby the amount of quinone is 10 or 100 mol per gram atom of palladium. EP-A-272728 teaches that other oxidants are also suitable for enhancing the catalyst activity, vii. organic nitrites and nitro compounds, which are typically used in similar, large amounts as the quinones. Amongst many nitrocompounds this reference mentions hydroxy-substituted nitrobenzene, such as 4-hydroxy-nitrobenzene, as suitable oxidants.

Surprisingly it has now been found that by using, especially in the gas phase operation, a catalyst composition comprising an anion which includes an organic oxidant moiety in its molecular structure, the increase of the catalytic activity is significantly larger than that obtained with the previously practised large amounts of oxidant, and, moreover, the use of a large amount of oxidant is avoided. Polymers prepared by using this catalyst composition possess unexpectedly a better thermal stability than polymers prepared by using the large amount of oxidant for enhancing the catalyst activity.

The invention thus relates to a catalyst composition comprising
a) a metal of Group VIII of the Periodic Table, and
b) an anion which includes an oxidant moiety comprising an aromatic or (cyclo)aliphatic group to which one or more oxo, nitro or nitroso groups are attached in its molecular structure.

The invention further relates to a process for the preparation of copolymers which comprises copolymerizing carbon monoxide with one or more ethylenically unsaturated compounds in the presence of a catalyst composition according to this invention.

A skilled person will appreciate that the anion of the catalyst composition of this invention is non- or weakly coordinating with the Group VIII metal under the polymerization conditions concerned.

The anion is typically an anion derived from an acid with a pKa of less than 6, in particular an anion of an acid with a pKa of less than 2. The anion may contain one or more anionic groups. It contains preferably one anionic group. The anion is preferably an anion derived from a sulphonic acid or a carboxylic acid. Phosphonic acids are other suitable sources of the weakly or non-coordinating anion. Other suitable anions contain boron as the negatively charged centre, such as tetrakis(hydrocarbyloxy)borate or tetra-arylborate anions.

The oxidant moiety comprises an aromatic or (cyclo)aliphatic group to which one or more oxo, nitro or nitroso groups are attached. Suitably the oxidant moiety is selected from nitro groups containing groups, such as nitrophenyl groups, 1,3-dinitrophenyl groups, 4-isopropyl-1-nitrophenyl groups and nitropropyl groups. The corresponding anions are thus selected from 1,3-dinitrobenzenes, 4-isopropyl-1-nitrobenzenes and nitropropanes substituted with an appropriate anionic group.

There is a preference for selecting the oxidant moiety from groups containing two carbonyl groups in conjugation with ethylenic and/or aromatic unsaturation as to form a quinone, in particular a 1,2- or 1,4-quinone. In such cases the anion of this invention may be a 1,2- or 1,4-benzoquinone or a 1,2- or 1,4-naphthaquinone or a 1,2-, 1,4- or 9,10-anthraquinone substituted with an appropriate anionic group. Preferred anionic groups are those of sulphonic acids.

In this invention very good results have been obtained with an anion derived from 9,10-anthraquinone-2,6-disulphonic acid, and in particular 1,2-naphthoquinone-4-sulphonic acid, 1,4-naphthoquinone-2-sulphonic acid and 9,10-anthraquinone-2-sulphonic acid.

The anion may be incorporated in the catalyst composition of the invention in the form a salt, typically a cobalt, nickel or silver salt, or in the form of an acid. Hence, if desired, the anion may be incorporated simultaneously with the Group VIII metal, e.g. as a complex in which the metal and the anion participate. An example is the complex Pd(CH₃CN)₂(1,2-naphthoquinone-4-sulphonate)₂ which can be prepared by reacting palladium chloride with the silver salt of 1,2-naphthoquinone-4-sulphonic acid in acetonitrile as solvent.

The amount of the anion present in the catalyst compositions of this invention is typically in the range of from 0.5 to 20 mol per gram atom of Group VIII metal, preferably from 1.0 to 10 mol per gram atom of Group VIII metal and most preferably from 1.5 to 5 mol per gram atom of Group VIII metal.

The metals of Group VIII include the noble metals ruthenium, rhodium, palladium, osmium, iridium and platinum and the iron group metals iron, cobalt and nickel. If desired, mixtures of Group VIII metals may be used. Among the group VIII metals, palladium, rhodium and nickel are preferred, in particular palladium.

For incorporating the Group VIII metal(s) in the catalyst system, usually a metal salt is used, preferably a metal salt of a carboxylic acid, for example acetic acid.

Preferably, the catalyst composition of the invention comprises, besides the Groups VIII metal and the anion, a ligand capable of complexing with the Group VIII metal via one or more atoms of the ligand selected from phosphorus, arsenic, antimony, sulphur and nitrogen atoms.

Suitable ligands include monodentate ligands, bidentate ligands and polydentate ligands. Bidentate ligands, in particular those which are capable of complexing with the Group VIII metal via two atoms of the ligand selected from phosphorus, sulphur and nitrogen atoms, are preferred.

Preferred nitrogen bidentates are compounds of the general formula 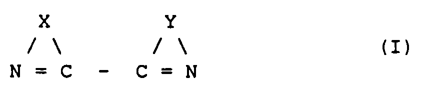 wherein X and Y represent organic bridging groups containing three or four bridging atoms, two of which are carbon atoms. The bridging groups X and Y may be connected to one another by a third bridging group. Examples of nitrogen bidentate ligands of the general formula (I) are 2,2'-bipyridine and 1,10-phenanthroline.

Preferred sulphur bidentates are compounds of the general formula R¹S-R-SR² wherein R represents a bivalent organic bridging group containing at least two carbon atoms in the bridge and each of R¹ and R² independently represents an optionally substituted hydrocarbyl group, such as 1,2-bis(ethylthio)ethane and cis-1,2-bis(benzylthio)ethene.

In particular preferred are phosphorus bidentates of the general formula

R¹R²P-R-PR³R⁴ (II)

wherein R has the aforesaid meaning and each of R¹, R², R³ and R⁴ independently represents a substituted or non-substituted hydrocarbyl group.

R¹, R², R³ and R⁴ may represent the same or different, optionally substituted, aliphatic, cycloaliphatic or aromatic groups. Preference is given to aromatic groups substituted by one or more polar groups. In particular preferred are compounds of formula (II) wherein each of R¹, R², R³ and R⁴ represents a phenyl group comprising an alkoxy group, typically containing up to 4 carbon atoms, at one or both ortho positions with respect to the phosphorus atom to which the phenyl group is linked.

Examples of suitable phosphorus containing bidentate ligands are 1,2-bis(diphenylphosphino)ethane, 1,3-bis(diphenylphosphino)propane, 1,3-bis[bis(2-methoxyphenyl)phosphino]propane and 1,3-bis[bis(2,6-dimethoxyphenyl)phosphino]propane.

The amount of bidentate ligand in the catalyst system is advantageously in the range of 0.5 to 100, preferably in the range of 1 to 50 mol per gram atom of Group VIII metal. If the catalyst system comprises a phosphorus bidentate ligand of formula (II), the amount is preferably in the range of 0.5 to 2.0 and more preferably in the range of 0.75 to 1.5 mol per gram atom of Group VIII metal.

When the process of this invention is carried out as a gas phase process, the catalyst composition is preferably used as a supported catalyst, i.e. the catalyst composition is deposited on a support or carrier material. The support may be inorganic, for example silica, alumina, talc or charcoal, or organic, for example cellulose, dextrose or dextran gel. Preference is given to a support which is a porous carrier material, in particular a carrier material having a pore volume of at least 0.01 cm³ per gram, as determined by mercury porosimetry.

Very suitable supports are polymeric materials such as polyethylene, polypropylene, polyoxymethylene and polystyrene. If desired mixed materials may be used such as polymer impregnated silicas.

A preferred carrier material is a linear alternating copolymer of carbon monoxide with one or more ethylenically unsaturated compounds, in particular a copolymer which as regards structure and composition is substantially the same as the copolymer to be prepared in the process of the invention.

The preparation of the catalyst system may conveniently be carried out in a separate step preceding the process of the invention, e.g. by combining the catalyst components or, if appropriate, by impregnating the carrier material with a solution or suspension of the catalyst components or precursors thereof. The various catalyst components may be added to the carrier material together or separately.

Ethylenically unsaturated compounds suitably used as starting material in the copolymerization process of the invention include compounds consisting exclusively of carbon and hydrogen and compounds which in addition comprise one or more hetero-atoms, such as unsaturated esters.

Unsaturated hydrocarbons are preferred ethylenically unsaturated compounds. Suitable examples are lower olefins such as ethene, propene and 1-butene, cyclic compounds such as cyclopentene and aromatic compounds such as styrene and alpha-methylstyrene. Preference is given to the use of ethene or mixtures comprising ethene and propene or ethene and 1-butene.

The molar ratio between the monomers, viz. carbon monoxide and the ethylenically unsaturated compound(s), is generally selected in the range of 5:1 to 1:5. Preferably the said molar ratio is selected in the range of 2:1 to 1:2, for example the monomers are used in substantially equimolar amounts.

When the process of this invention is carried out as a gas phase process, it is preferably carried out with addition of a small quantity of a volatile protic liquid, such as a lower aliphatic alcohol, i.e. typically an alcohol having up to 4 carbon atoms, and/or hydrogen. The quantity of this liquid is chosen so small that under the polymerization conditions the liquid is substantially in the gas phase. A suitable quantity may be 40-60% by weight, relative to the quantity which is sufficient to saturate the gas phase under the conditions of the polymerization. Apolar liquids, such as toluene, may be used as well, in particular when the Group VIII metal is incorporated in the catalyst composition as a compound which contains a hydrocarbyl group or an acyl group linked with the Group VIII metal via a covalent bond. Such hydrocarbyl or acyl groups are typically aliphatic and contain suitably up to eight carbon atoms.

When the copolymerisation process is carried out as a liquid phase process, a diluent is preferably used in which the catalyst composition is soluble and in which the formed copolymer product is substantially insoluble. Preferred diluents are volatile protic liquids, preferably comprising a lower alcohol, i.e. typically an alcohol having up to 4 carbon atoms, in particular methanol. The diluent may also be apolar, such as toluene, in particular when a Group VIII metal compound is incorporated in the catalyst composition as described in the preceding paragraph.

The preparation of the copolymers is preferably carried out at a temperature in the range of 20-200 °C, although the use of a reaction temperature outside that range is not precluded. Preferably the reaction temperature is selected in the range of 25-150 °C. Suitable pressures generally are within the range of 1-200 bar, but preferably the pressure is in the range of 2-150 bar. The quantity of catalyst used in the process of this invention can vary within wide limits. Per mol of ethylenically unsaturated compound to be polymerized, a quantity of catalyst is preferably used which contains 10⁻⁷-10⁻³ and in particular 10⁻⁶-10⁻⁴ gram atom Group VIII metal.

The copolymers obtained according to the invention can be processed into shaped articles, films, sheets, fibres and the like. They exhibit good mechanical properties and are hence suitable for a variety of commercially interesting applications, e.g. in the car industry, for the manufacturing of packaging materials for food and drinks and various applications in the domestic sphere.

The invention will be further illustrated by the following examples.

### Example 1 (for comparison)

A carbon monoxide/ethene copolymer was prepared as follows. A catalyst was prepared by absorbing a catalyst solution containing
0.25 ml tetrahydrofuran,
3.75 ml methanol,
0.01 mmol palladium acetate,
0.011 mmol 1,3-bis[bis(2-methoxyphenyl)phosphino]propane and
0.05 mmol p-toluenesulphonic acid on 8 g of a linear alternating terpolymer of carbon monoxide with ethene and propene. The catalyst thus prepared was introduced into a 500-ml autoclave provided with a mechanical stirrer. After the autoclave was closed and the air therein was replaced by 1 bar carbon monoxide, 20 bar carbon monoxide was forced in, followed by 20 bar ethene. The autoclave contents were brought to a temperature of 90 °C and the pressure was maintained by forcing in a 1:1 (v/v) carbon monoxide/ethene mixture. After 5 hours the polymerisation was terminated by releasing the pressure and cooling the reaction mixture to room temperature.

The polymerisation rate was calculated from the consumption of the carbon monoxide/ethene mixture used to maintain the pressure. The rate found after 1 hour polymerisation time (an approximation of the initial rate), the rate found after 4 hours and the average rate over the entire period of 5 hours have been given in Table I. The quantity of copolymer obtained was in agreement with the average polymerisation rate.

### Examples 2 - 7

Carbon monoxide/ethene copolymers were prepared in substantially the same way as in Example 1, but with the difference that 0.05 mmol of one of the sulphonic acids or cobalt sulphonates mentioned in Table I were used, instead of p-toluenesulphonic acid.

The polymerisation rates were as indicated in Table I. The quantities of the copolymers obtained were in agreement with the average polymerisation rates.

### Examples 8 and 9 (for comparison)

Carbon monoxide/ethene copolymers were prepared in substantially the same way as in Example 1, but with the difference that the catalyst solution contained, as an additional compound, 1,4-naphthoquinone. The quantity of 1,4-naphthoquinone was 0.05 mmol in Example 8 and 0.5 mmol in Example 9.

The polymerisation rates were as indicated in Table I. The quantities of the copolymers obtained were in agreement with the average polymerisation rates.

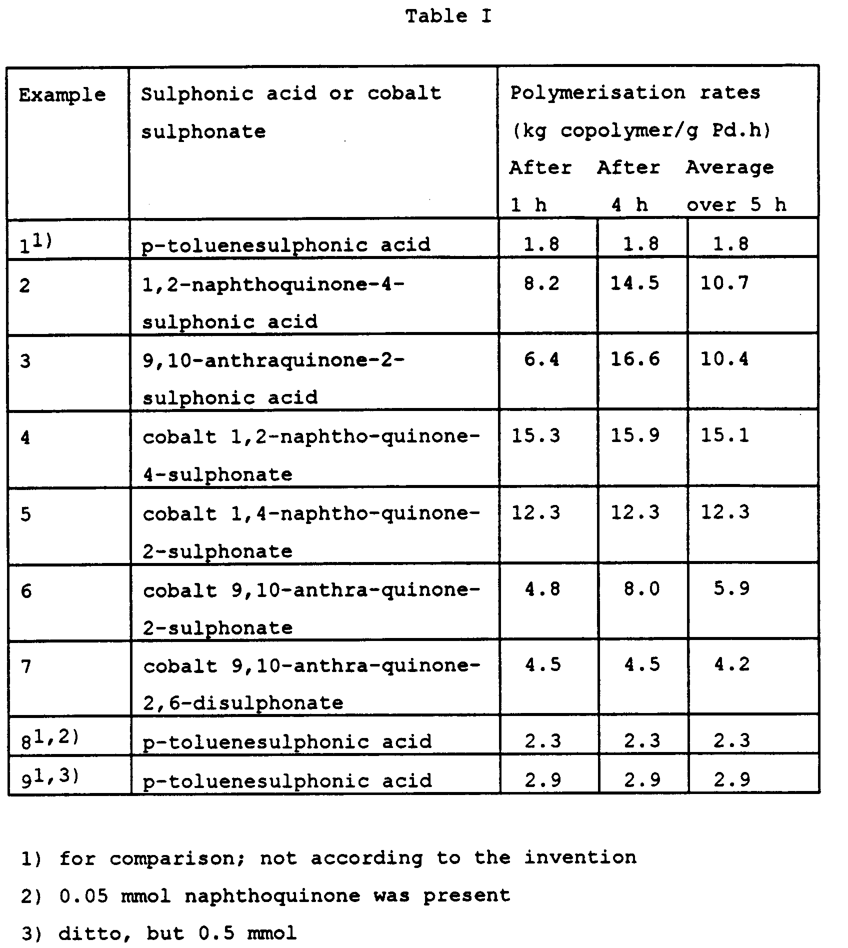

### Example 10 (for comparison)

A carbon monoxide/ethene copolymer was prepared as follows. A 300-ml autoclave provided with a mechanical stirrer was charged with 130 ml methanol and 2.7 g of a linear alternating terpolymer of carbon monoxide with ethene and propene. A catalyst solution prepared by combining
0.13 ml tetrahydrofuran,
0.88 ml methanol,
0.005 mmol palladium acetate,
0.0055 mmol 1,3-bis[bis(2-methoxyphenyl)phosphino]propane and
0.025 mmol p-toluenesulphonic acid
was added. After the autoclave was closed and the air therein was replaced by 1 bar carbon monoxide, 25 bar carbon monoxide was forced in, followed by 25 bar ethene. The autoclave contents were brought to a temperature of 85 °C and the pressure was maintained by forcing in a 1:1 (v/v) carbon monoxide/ethene mixture. After 2.5 hours the polymerisation was terminated by releasing the pressure and cooling the reaction mixture to room temperature. The copolymer was filtered off, washed with methanol and dried at 70 °C.

11 g of copolymer was obtained, from which an average polymerisation rate of 6 kg copolymer/(g Pd.hour) was calculated.

### Example 11

A carbon monoxide/ethene copolymer was prepared in substantially the same way as in Example 11, but with the difference that 0.025 mmol of 1,2-naphthoquinone-4-sulphonic acid was used, instead of p-toluenesulphonic acid.

20 g of copolymer was obtained. The average polymerisation rate was 13 kg copolymer/(g Pd.hour).

With the aid of C¹³-NMR analysis it was established that the carbon monoxide/ethene copolymers prepared according to Examples 1 - 11 had linear chains in which the units originating from carbon monoxide were alternating with the units originating from ethene.

## Claims

1. A catalyst composition comprising
a) a metal of Group VIII of the Periodic Table, and
b) an anion which includes an oxidant moiety comprising an aromatic or (cyclo)aliphatic group to which one or more oxo, nitro or nitroso groups are attached in its molecular structure.

2. A composition as claimed in claim 1, characterized in that the anion is an anion of an acid with a pKa of less than 2, in particular a sulphonic acid or a carboxylic acid.

3. A composition as claimed in claim 1 or 2, characterized in that the oxidant moiety of the anion is selected from groups containing two carbonyl groups in conjugation with ethylenic and/or aromatic unsaturation, in particular a 1,2- or 1,4-quinone.

4. A composition as claimed in claim 2 and 3, characterized in that the anion is an anion derived from 9,10-anthraquinone-2,6-disulphonic acid, 1,2-naphthoquinone-4-sulphonic acid, 1,4-naphthoquinone-2-sulphonic acid or 9,10-anthraquinone-2-sulphonic acid.

5. A composition as claimed in any of claims 1-4, characterized in that the amount of the anion present is in the range of from 1.0 to 10 mol per gram atom of Group VIII metal.

6. A composition as claimed in claim 5, characterized in that the amount of the anion present is in the range of from 1.5 to 5 mol per gram atom of Group VIII metal.

7. A composition as claimed in any of claims 1-6, characterized in that the catalyst composition comprises as an additional component c) a ligand capable of complexing with the Group VIII metal via one or more atoms of the ligand selected from phosphorus, arsenic, antimony, sulphur and nitrogen atoms.

8. A composition as claimed in claim 7, characterized in that the ligand is of the general formula R¹R²P-R-PR³R⁴ (formula (II)) wherein each of R¹, R², R³ and R⁴ independently represents a substituted or non-substituted hydrocarbyl group and R represents a bivalent organic bridging group containing at least two carbon atoms in the bridge.

9. A composition as claimed in claim 8, characterized in that in the ligand of formula (II) each of R¹, R², R³ and R⁴ represents a phenyl group comprising an alkoxy group in one or both ortho-positions with respect to the phosphorus atom to which the phenyl group is linked.

10. A composition as claimed in any of claims 1-9, characterized in that the composition is deposited on a support.

11. A composition as claimed in claim 10, characterized in that the support is substantially a porous carrier material which is a copolymer of carbon monoxide with one or more ethylenically unsaturated compounds.

12. A process for the preparation of copolymers which comprises copolymerizing carbon monoxide with one or more ethylenically unsaturated compounds in the presence of a catalyst composition as claimed in any of claims 1-11.

13. A process as claimed in claim 12, characterized in that it is carried out in the gas phase.

14. A process as claimed in claim 12 or 13, characterized in that as ethylenically unsaturated compound ethene or a mixture comprising ethene and propene or ethene and 1-butene is used, in that the copolymerization is carried out at a temperature in the range of 25-150 °C, at a pressure in the range of 2-150 bar and using a molar ratio between the ethylenically unsaturated compound(s) and carbon monoxide in the range of 5:1 to 1:5, and in that per mol of ethylenically unsaturated compound to be polymerized, a quantity of catalyst is used which contains 10⁻⁶-10⁻⁴ gram atom Group VIII metal.

## Patentansprüche

1. Katalysatorzusammensetzung mit einem Gehalt an
a) einem Metall der Gruppe VIII des Periodensystems der Elemente und
b) einem Anion, welches in seiner Molekularstruktur einen Oxidationsmittelrest aufweist, der eine aromatische oder (cyclo)aliphatische Gruppe enthält, an die eine oder mehrere Oxo-, Nitro- oder Nitrosogruppen gebunden sind.

2. Zusammensetzung nach Anspruch 1, dadurch gekennzeichnet, daß das Anion ein Anion einer Säure mit einem pKa-Wert von kleiner als 2 ist, insbesondere einer Sulfonsäure oder einer Carbonsäure.

3. Zusammensetzung nach Anspruch 1 oder 2, dadurch gekennzeichnet, daß der Oxidationsmittelrest des Anions aus Gruppen ausgewählt ist, die zwei Carbonylgruppen in Konjugation mit ethylenischer und/oder aromatischer Unsättigung enthalten, insbesondere einem 1,2- oder 1,4-Chinon.

4. Zusammensetzung nach Anspruch 2 oder 3, dadurch gekennzeichnet, daß das Anion ein von 9,10-Anthrachinon-2,6-disulfonsäure, 1,2-Naphthochinon-4-sulfonsäure, 1,4-Naphthochinon-2-sulfonsäure oder 9,10-Anthrachinon-2-sulfonsäure abgeleitetes Anion ist.

5. Zusammensetzung nach einem der Ansprüche 1 bis 4, dadurch gekennzeichnet, daß die Menge des vorliegenden Anions im Bereich von 1,0 bis 10 Mol je Grammatom Gruppe VIII-Metall liegt.

6. Zusammensetzung nach Anspruch 5, dadurch gekennzeichnet, daß die Menge des vorliegenden Anions im Bereich von 1,5 bis 5 Mol je Grammatom Gruppe VIII-Metall liegt.

7. Zusammensetzung nach einem der Ansprüche 1-6, dadurch gekennzeichnet, daß die Katalysatorzusammensetzung als eine zusätzliche Komponente c) einen Liganden enthält, der zur Komplexbildung mit dem Gruppe VIII-Metall über ein oder mehrere Atome des Liganden, ausgewählt unter Phosphor-, Arsen-, Antimon-, Schwefel- und Stickstoffatomen, befähigt ist.

8. Zusammensetzung nach Anspruch 7, dadurch gekennzeichnet, daß der Ligand der allgemeinen Formel R¹R²P-R-PR³R⁴ (Formel (II)) entspricht, worin jeder der Reste R¹, R², R³ und R⁴ unabhängig voneinander eine substituierte oder nichtsubstituierte Hydrocarbylgruppe darstellt und R eine zweiwertige organische Brückengruppe bezeichnet, die wenigstens 2 Kohlenstoffatome in der Brücke enthält.

9. Zusammensetzung nach Anspruch 8, dadurch gekennzeichnet, daß in dem Liganden der Formel (II) jeder der Reste R¹, R², R³ und R⁴ eine Phenylgruppe darstellt, die eine Alkoxygruppe in einer oder in beiden ortho-Positionen bezüglich des Phosphoratoms enthält, an die die Phenylgruppe gebunden ist.

10. Zusammensetzung nach einem der Ansprüche 1-9, dadurch gekennzeichnet, daß die Zusammensetzung auf einem Träger aufgebracht ist.

11. Zusammensetzung nach Anspruch 10, dadurch gekennzeichnet, daß der Träger im wesentlichen ein poröses Trägermaterial ist, das ein Copolymer aus Kohlenmonoxid mit einer oder mit mehreren ethylenisch ungesättigten Verbindungen ist.

12. Verfahren zur Herstellung von Copolymeren, das ein Copolymerisieren von Kohlenmonoxid mit einer oder mit mehreren ethylenisch ungesättigten Verbindungen in Anwesenheit einer Katalysatorzusammensetzung nach einem der Ansprüche 1-11 umfaßt.

13. Verfahren nach Anspruch 12, dadurch gekennzeichnet, daß es in der Gasphase ausgeführt wird.

14. Verfahren nach Anspruch 12 oder 13, dadurch gekennzeichnet, daß als ethylenisch ungesättigte Verbindung Ethen oder ein Ethen und Propen oder Ethen und 1-Buten enthaltendes Gemisch verwendet wird, daß die Copolymerisation bei einer Temperatur im Bereich von 25-150°C bei einem Druck im Bereich von 2-150 bar und unter Anwendung eines Molverhältnisses zwischen der ethylenisch ungesättigten Verbindung bzw. den ethylenisch ungesättigten Verbindungen und Kohlenmonoxid im Bereich von 5:1 bis 1:5 ausgeführt wird, und daß pro Mol ethylenisch ungesättigter, zu polymerisierender Verbindung eine Katalysatormenge verwendet wird, die 10⁻⁶ bis 10⁻⁴ Grammatom Gruppe VIII-Metall enthält.

## Revendications

1. Composition catalytique comprenant :
a) un métal appartenant au groupe VIII du tableau périodique, et
b) un anion qui inclut un groupement oxydant comprenant un groupe aromatique ou (cyclo)aliphatique auquel sont attachés un ou plusieurs groupes oxo, nitro ou nitroso, dans sa structure moléculaire.

2. Composition suivant la revendication 1, caractérisée en ce que l'anion est un anion d'un acide qui possède un pKa inférieur à 2, plus particulièrement, un acide sulfonique ou un acide carboxylique.

3. Composition suivant la revendication 1 ou 2, caractérisée en ce que le groupement oxydant de l'anion est choisi parmi des radicaux qui contiennent des groupes carbonyle en conjugaison avec une insaturation éthylénique et/ou aromatique, en particulier, une 1,2- ou 1,4-quinone.

4. Composition suivant l'une quelconque des revendications 2 et 3, caractérisée en ce que l'anion est un anion qui dérive de l'acide 9,10-anthraquinone-2,6-disulfonique, de l'acide 1,2-naphtoquinone-4-sulfonique, de l'acide 1,4-naphtoquinone-2-sulfonique ou de l'acide 9,10-anthraquinone-2-sulfonique.

5. Composition suivant l'une quelconque des revendications 1 à 4, caractérisée en ce que la quantité de l'anion présente varie de 1,0 à 10 moles par atome-gramme de métal du groupe VIII.

6. Composition suivant la revendication 5, caractérisée en ce que la quantité de l'anion présente varie de 1,5 à 5 moles par atomegramme de métal du groupe VIII.

7. Composition suivant l'une quelconque des revendications 1 à 6, caractérisée en ce que la composition catalytique comprend, à titre de composant supplémentaire, c) un ligand capable de complexation avec le métal du groupe VIII par l'intermédiaire d'un ou plusieurs atomes du ligand, choisis parmi les atomes de phosphore, d'arsenic, d'antimoine, de soufre et d'oxygène.

8. Composition suivant la revendication 7, caractérisée en ce que le ligand répond à la formule générale R¹R²P-R-PR³R⁴ (formule (II)) dans laquelle chacun des symboles R¹, R², R³ et R⁴ représente indépendamment un radical hydrocarbyle substitué ou non substitué, et R représente un groupe de pontage organique bivalent contenant au moins deux atomes de carbone dans le pont

9. Procédé suivant la revendication 8, caractérisé en ce que dans le ligand de la formule (II), chacun des symboles R¹, R², R³ et R⁴ représente un radical phényle comprenant un groupe alcoxy dans l'une ou les deux positions ortho par rapport à l'atome de phosphore auquel le groupe phényle est lié.

10. Composition suivant l'une quelconque des revendication 1 à 9, caractérisée en ce que la composition est déposée sur un support.

11. Composition suivant la revendication 10, caractérisée en ce que le support est une matière de support ou servant de véhicule poreuse, qui est un copolymère du monoxyde de carbone et d'un ou plusieurs composés éthyléniquement insaturés.

12. Procédé de préparation de copolymères, caractérisé en ce que l'on copolymérise le monoxyde de carbone et un ou plusieurs composés éthyléniquement insaturés en présence d'une composition catalytique suivant l'une quelconque des revendications 1 à 11.

13. Procédé suivant la revendication 12, caractérisé en ce qu'on l'entreprend en phase gazeuse.

14. Procédé suivant la revendication 12 ou 13, caractérisé en ce que l'on utilise, à titre de composé éthyléniquement insaturé, de l'éthène ou un mélange comprenant de l'éthène et du propène, ou de l'éthène et du 1-butène, en ce que l'on entreprend la copolymérisation à une température qui varie de 25 à 150°C, sous une pression qui fluctue de 2 à 150 bars et en employant un rapport molaire entre le ou les composés éthyléniquement insaturés et le monoxyde de carbone qui varie de 5:1 à 1:5, et en ce que, par mole du composé éthyléniquement insaturé à polymériser, on utilise une quantité de catalyseur qui contient 10⁻⁶ à 10⁻⁴ atome-gramme de métal du groupe VIII.
